Europäisches Patentamt

European Patent Office

Office européen des brevets

(11) Veröffentlichungsnummer: **0 433 475 A1**

## (12) EUROPÄISCHE PATENTANMELDUNG

(21) Anmeldenummer: 89123474.2

(22) Anmeldetag: 19.12.89

(51) Int. Cl.5: **B32B 15/08**, B32B 3/24,
B65D 77/20

(43) Veröffentlichungstag der Anmeldung:
26.06.91 Patentblatt 91/26

(84) Benannte Vertragsstaaten:
AT BE CH DE ES FR GB GR IT LI LU NL SE

(71) Anmelder: ALCAN DEUTSCHLAND GMBH
Werk Lüdenscheid
W-3400 Göttingen(DE)

(72) Erfinder: Hartzheim, Gerda Maria
Lange Strasse 4
W-5840 Schwerte 4(DE)

(74) Vertreter: Eitle, Werner, Dipl.-Ing. et al
Hoffmann, Eitle & Partner Patentanwälte
Arabellastrasse 4
W-8000 München 81(DE)

(54) Verfahren zur Herstellung von Membrandeckeln zum Verschliessen von Behältern.

(57) Die Erfindung betrifft ein Verfahren zur Herstellung von aus einem Mehrschichtmaterial mit mindestens einer Metallschicht bestehenden Membrandeckeln (1) zum Verschließen von Behältern, die mindestens eine über den Behälterumfang hinausragende metallfreie Aufreißlasche (2) haben. Hierbei wird ein verbessertes Verfahren dadurch erzielt, daß zunächst in eine Metallfolie (9) Ausschnitte (11) eingebracht werden, in deren Bereichen die Aufreißlaschen (2) der später aus dem Mehrschichtmaterial auszuschneidenden Membrandeckel (1) liegen, daß daraufhin auf die Metallfolie (9) eine nichtmetallische Schicht aufkaschiert wird, welche aus einem heißsiegelfähigen Material besteht und/oder auf deren Außenseite eine Schicht aus heißsiegelfähigem Material (10) aufgebracht ist, und daß schließlich aus dem so gebildeten Mehrschichtmaterial die Membrandeckel (1) mit Aufreißlasche (2) derart ausgeschnitten werden, daß die Aufreißlaschen aus den metallfolienfreien Flächenbereichen (16) des Mehrschichtmaterials ausgeformt werden.

Fig. 5

Fig. 6

EP 0 433 475 A1

# VERFAHREN ZUR HERSTELLUNG VON MEMBRANDECKELN ZUM VERSCHLIESSEN VON BEHÄLTERN

Die Erfindung betrifft ein Verfahren zur Herstellung von aus einem Mehrschichtmaterial mit mindestens einer Metallschicht bestehenden Membrandeckeln zum Verschließen von Behältern, die mindestens eine über den Behälterumfang hinausragende metallfreie Aufreißlasche haben.

Zum Verschließen von Behältern dienende Membrandeckel mit einer Metallschicht und einer Kunststoffschicht sowie einer metallfreien Aufreißlasche sind bereits durch die nicht vorveröffentlichte deutsche Patentanmeldung P 39 20 324.7 vorgeschlagen worden. Die Metallfreiheit der Aufreißlasche dient bei diesen Membrandeckeln dazu, diese auf einwandfreie Weise durch induktive Erwärmung mit der auf dem Membrandeckel angebrachten Siegelschicht an dem zu verschließenden Behälter ansiegeln zu können, da die bei der Ansiegelung verwendeten induzierten Wirbelströme nicht durch ein in der Aufreißlasche befindliches Metall beeinflußt werden.

Der vorliegenden Erfindung liegt die Aufgabe zugrunde, ein möglichst einfaches und kostengünstiges Verfahren zur Herstellung von derartigen Membrandeckeln zu schaffen. Diese Aufgabe wird erfindungsgemäß bei einem Verfahren der eingangs genannten Gattung dadurch gelöst, daß zunächst in eine Metallfolie, beispielsweise in eine Aluminiumfolie, Ausschnitte eingebracht werden, in welchen die Aufreißlaschen der später aus dem Mehrschichtmaterial auszuschneidenden Membrandeckel zu liegen kommen, daß daraufhin auf die Metallfolie eine nichtmetallische Schicht aufkaschiert wird, welche aus einem heißsiegelfähigen Material besteht und/oder auf deren Außenseite eine Schicht aus heißsiegelfähigem Material aufgebracht ist, und daß schließlich aus dem so gebildeten Mehrschichtmaterial die Behälterdeckel mit Aufreißlaschen derart ausgeschnitten werden, daß die Aufreißlaschen aus den metallfreien Flächenbereichen des Mehrschichtmaterials ausgeformt werden.

Gemäß einer besonders zweckmäßigen Ausführungsform des erfindungsgemäßen Verfahrens werden die Ausschnitte in die Metallfolie derart eingebracht, daß ihre Ränder am Rand der später aus dem Mehrschichtmaterial auszuschneidenen Membrandeckel zu liegen kommen. Die Membrandeckel können mit ihren Aufreißlaschen aus dem Mehrschichtmaterial derart ausgeschnitten werden, daß jeweils die Aufreißlaschen mehrerer Deckel aus den metallfolienfreien Flächenbereichen des Mehrschichtmaterials ausgeformt werden. Hierdurch kann die Anzahl der in die Metallfolie einzubringenden Ausschnitte verringert werden.

Mit dem erfindungsgemäßen Verfahren können weiterhin bei gleichem Muster der metallfreien Flächenbereiche unterschiedlich große Deckel mit nichtmetallischen Aufreißlaschen aus dem Mehrschichtmaterial ausgeschnitten werden. Daher kann das gleiche Schneidwerkzeug zum Einbringen der Ausschnitte in die Metallfolie verwendet werden.

Der mit dem Membrandeckel verschlossene Behälter ist üblicherweise noch mit einem zusätzlichen Schraubdeckel verschlossen, in welchem ein beschichteter Karton oder ein Papier-Kunststofflaminat als Sekundärdichtung angeordnet sein kann, die ein dichtes Wiederverschließen des Behälters nach dem Entfernen des Membrandeckels ermöglicht.

Eine zweckmäßige Ausgestaltung des Verfahrens sieht vor, daß die Metallfolie an der später dem Schraubdeckel zugewendeten Seite mit einer Schicht aus Karton, Papier oder dgl. versehen wird und daß das hierfür verwendete Kaschiermittel eine nur geringe Haftfestigkeit hat. Der aus einem solchen Mehrschichtmaterial herausgestanzte Membrandeckel wird mit der Innenseite des Schraubdeckels fest haftend verbunden. Beim späteren Öffnen des Schraubdeckels schert die Kartonschicht von der eigentlichen Siegelmembran ab und verbleibt als Sekundärdichtung im Schraubdeckel.

Die für den Aufbau des Mehrschichtmaterials verwendeten Kaschiermittel können in ihrer Haftfestigkeit auch so abgestimmt werden, daß beim ersten Öffnen des Schraubdeckels die Laminattrennung durch Abscheren zwischen der Metallfolie und der auf dem Rand der Behälteröffnung aufgesiegelten nichtmetallischen Schicht erfolgt.

Eine weitere zweckmäßige Ausgestaltung des Verfahrens sieht vor, daß die Metallfolie mit einer an einer Außenseite des Mehrschichtmaterials zu liegen kommenden Schicht, z.B. aus Karton, Papier oder dgl., versehen wird, und daß auf die Metallfolie vor dem Stanzen und dem Aufkaschieren der nichtmetallischen Schicht eine weitere Metallfolie aufgebracht wird. Hierbei kann das Kaschiermittel, das die Metallfolien verbindet, ein Kaschiermittel mit geringer Haftfestigkeit sein, so daß durch Abschrauben des Schraubdeckels, der mit der Oberseite des Mehrschichtmaterials verbunden ist, ein Lösen der Metallfolien voneinander ermöglicht wird. Eine der beiden Metallfolien verbleibt auf der Behälteröffnung, die andere mit der Kartonkaschierung in dem Schraubdeckel und dient nach dem Abreißen des Membrandeckels als Sekundärdichtung beim Wiederverschließen des Behälters.

In den Zeichnungen sind besonders vorteilhafte Ausführungsbeispiele dargestellt, die im folgenden beschrieben werden. Es zeigen:

Fig. 1 die Draufsicht auf ein Metallfolienlaminat, das im ersten Schritt des erfindungsgemäßen Verfahrens eingebrachte Ausschnitte hat und in welcher die durchbrochenen Linien die später auszuschneidenden Deckelränder darstellen;

Fig. 2 einen Schnitt durch das Metallfolienlaminat nach Linie II-II in Fig. 1 in vergrößerter Darstellung;

Fig. 3 die Draufsicht auf das im zweiten Verfahrensschritt hergestellte Mehrschichtmaterial, in der die schraffierten Flächen die in dem Metallfolienlaminat befindlichen Ausschnitte und die durchbrochenen Linien die späteren Deckelumrisse darstellen;

Fig. 4 einen Schnitt durch das Mehrschichtmaterial nach Linie IV-IV in Fig. 3 in vergrößerter Darstellung;

Fig. 5 die Draufsicht auf das in Fig. 3 gezeigte Mehrschichtmaterial und die daraus im letzten Verfahrensschritt auszuschneidenden Membrandeckel mit Aufreißlasche;

Fig. 6 den Schnitt durch das Mehrschichtmaterial gemäß Fig. 5 nach Linie VI-VI in Fig. 5;

Fig. 7 bis 10 Draufsichten auf Mehrschichtmaterialien mit unterschiedlich angeordneten Ausschnitten im Metallfolienlaminat und daraus im letzten Verfahrensschritt auszuschneidende Membrandeckel mit Aufreißlasche; und

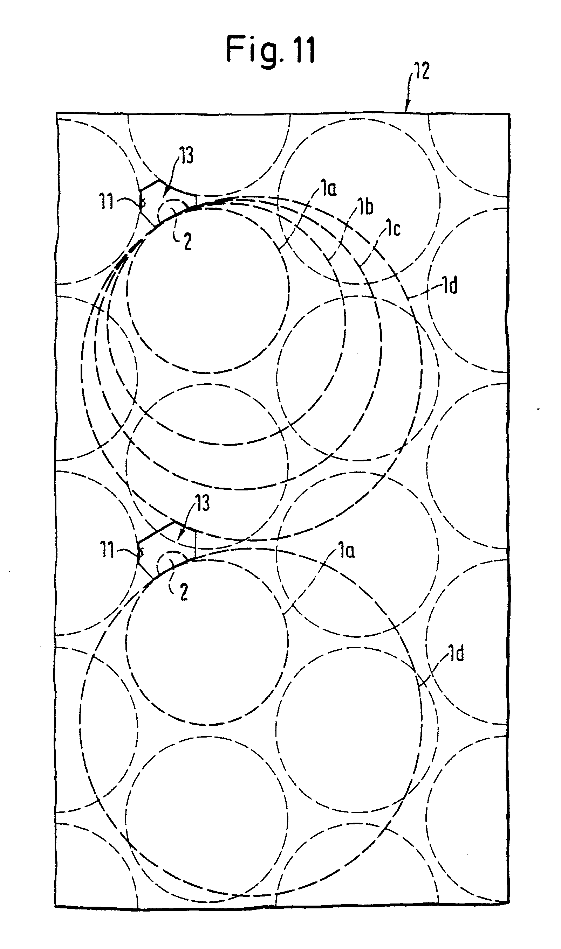

Fig. 11 Draufsicht auf ein weiteres Mehrschichtmaterial mit daraus im letzten Verfahrensschritt auszuschneidenden Membrandeckeln unterschiedlicher Größe mit metallfreier Aufreißlasche.

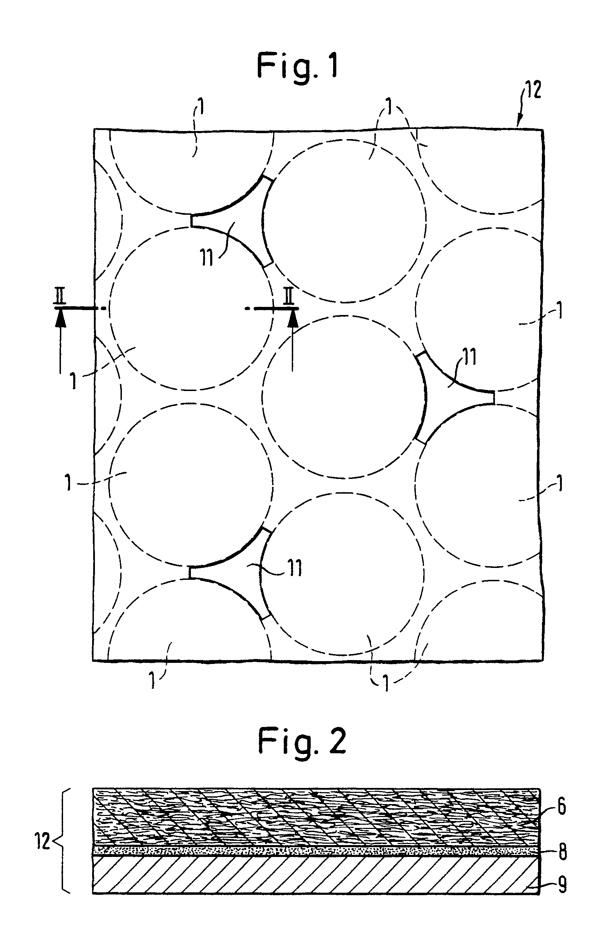

Fig. 1 zeigt ein Metallfolienlaminat 12, in dem gemäß dem ersten erfindungsgemäßen Verfahrensschritt Ausschnitte 11 eingebracht werden, in welchen die Aufreißlaschen 2 der später aus dem Mehrschichtmaterial auszuschneidenen Membrandeckel 1 (mit durchbrochenen Linien dargestellt) zu liegen kommen. Das Metallfolienlaminat 12 besteht aus einer Metallfolie 9, welche wie in Fig. 2 ersichtlich, über ein Kaschiermittel 8 mit einem Karton 6 verbunden ist.

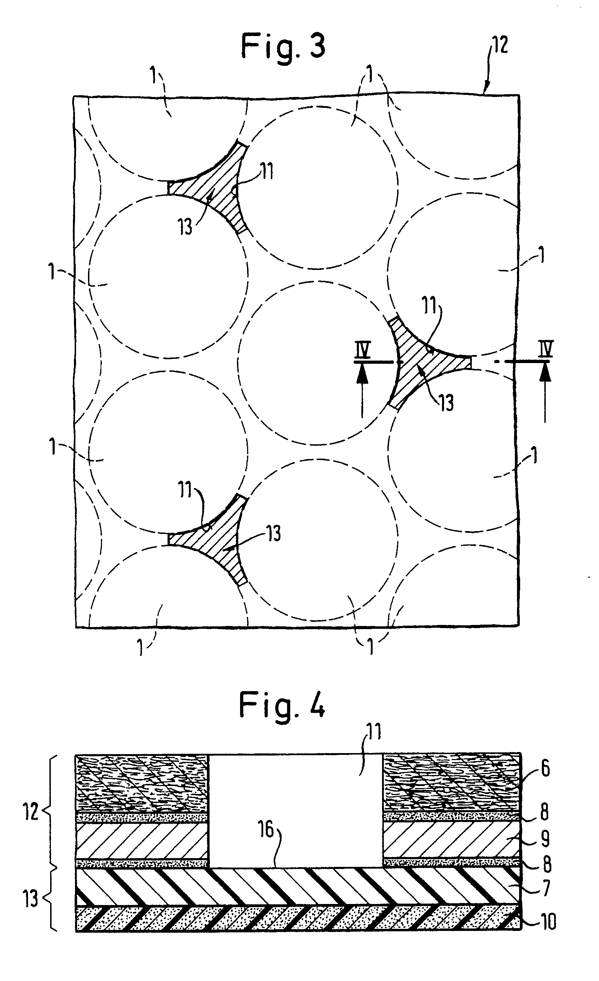

Fig. 3 zeigt die Draufsicht auf das im zweiten Verfahrensschritt durch Aufkaschieren eines Kunststoffolienlaminats 13 auf das Metallfolienlaminat 12 hergestellte Mehrschichtmaterial. Die Flächenbereiche 16 dieses Mehrschichtmaterials, in welchem sich die vom Kunststoffolienlaminat überdeckten Ausschnitte 11 befinden, sind schraffiert dargestellt.

Wie sich aus Fig. 4 ergibt, besteht das Kunststoffolienlaminat 13 aus einer Kunststoffolie 7 und einer darauf aufgebrachten Schicht aus heißsiegelfähigem Material 10. Mit der Kunststoffolie 7 ist dieses Laminat 13 mit Hilfe eines Kaschiermittels 8 auf die Metallfolie 9 des Metallfolienlaminats 12 im zweiten Verfahrensschritt aufkaschiert. Die Heißsiegelschicht 10 dient zum späteren Ansiegeln der aus dem Mehrschichtmaterial auszuschneidenden Membrandeckel.

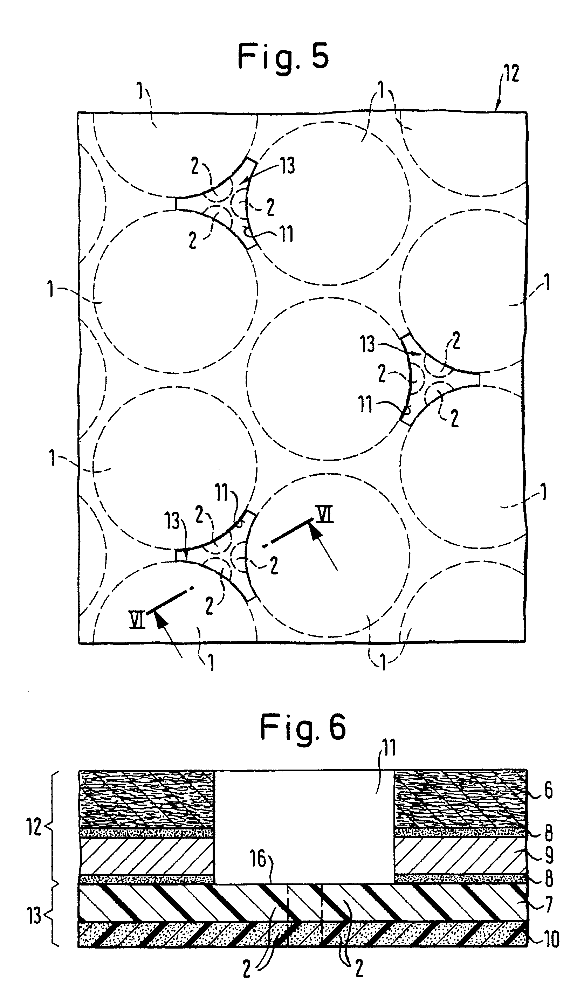

Aus Fig. 5 ist ersichtlich, daß aus dem Mehrschichtmaterial gemäß Fig. 3 die Membrandeckel 1 mit Aufreißlasche derart ausgeschnitten werden, daß die Aufreißlaschen von drei Membrandeckeln aus jeweils einem der metallfreien Flächenbereiche 16 des Mehrschichtmaterials ausgeformt werden.

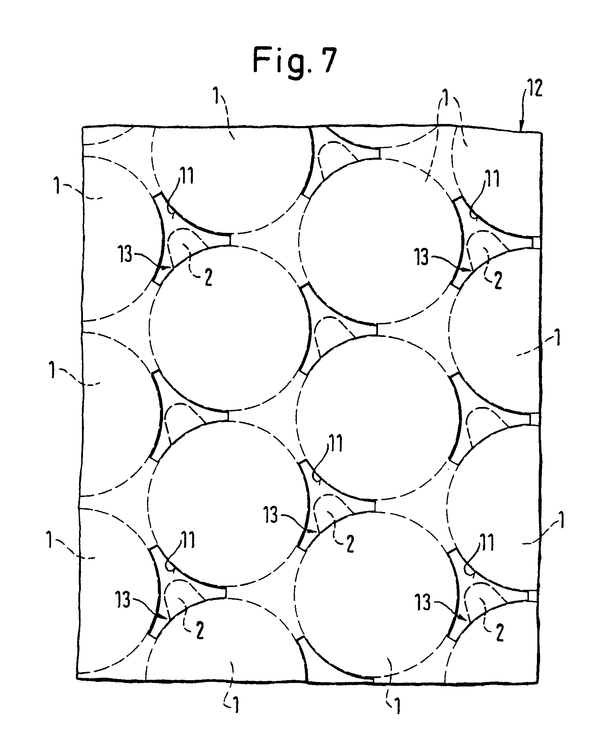

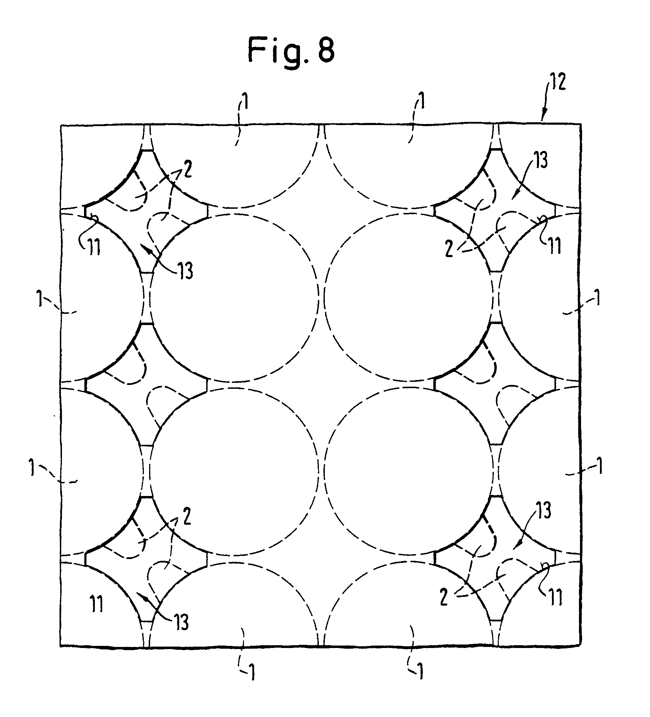

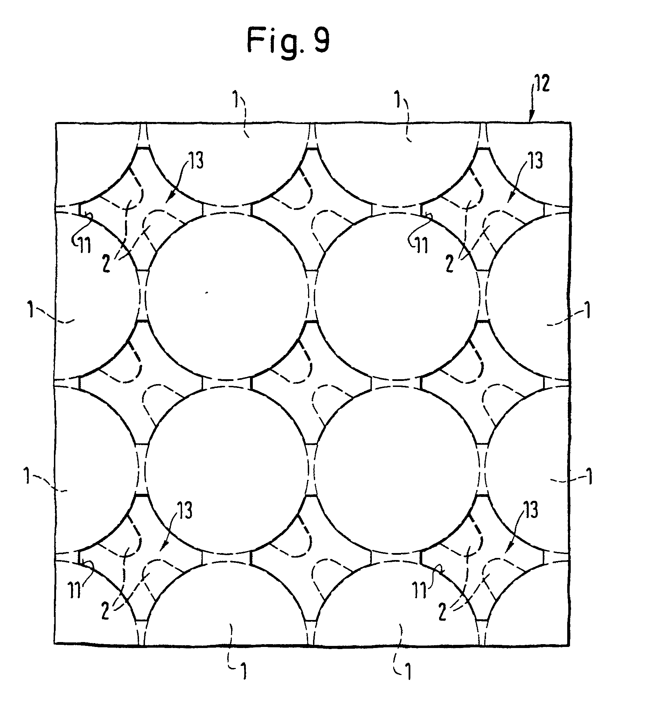

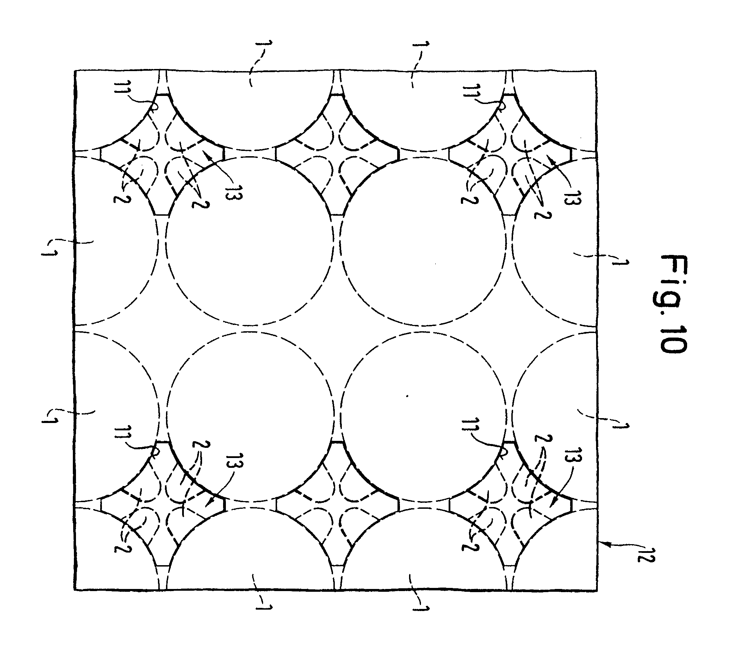

Die in den Fig. 7 bis 10 dargestellten Mehrschichtmaterialien zeigen unterschiedlich angeordnete metallfreie Flächenbereiche 16, aus denen jeweils im letzten Verfahrensschritt eine unterschiedliche Anzahl von Aufreißlaschen ausgeformt werden. Hierbei weisen die Membrandeckel der Fig. 9 und 10 jeweils eine zweite auszuformende Aufreißlasche auf.

Bei Bedarf kann durch entsprechende Anordnung der Zuschnitte die Anzahl der Aufreißlaschen noch weiter erhöht werden.

## Bezugszeichenliste

1 Membrandeckel
2 Aufreißlaschen
9 Metallfolie
6 Karton
7 Kunststoffolie
8 Kaschiermittel
10 heißsiegelfähiges Material
11 Ausschnitt
12 Metallfolienlaminat
13 Kunststoffolienlaminat
16 metallfolienfreie Flächenbereiche

## Ansprüche

1. Verfahren zur Herstellung von aus einem Mehrschichtmaterial mit mindestens einer Metallschicht bestehenden Membrandeckeln zum Verschließen von Behältern, die mindestens eine über den Behälterumfang hinausragende metallfreie Aufreißlasche haben, dadurch gekennzeichnet,

a) daß zunächst in eine Metallfolie (9) Ausschnitte (11) eingebracht werden, in deren Bereichen die Aufreißlaschen (2) der später aus dem Mehrschichtmaterial auszuschneidenden Membrandeckel (1) liegen,

b) daß daraufhin auf die Metallfolie (9) eine nichtmetallische Schicht aufkaschiert wird, welche aus einem heißsiegelfähigen Material besteht und/oder auf deren Außenseite eine Schicht aus heißsiegelfähigem Material (10) aufgebracht ist,

c) und daß schließlich aus dem so gebildeten Mehrschichtmaterial die Membrandeckel (1) mit mindestens einer Aufreißlasche (2) derart ausgeschnitten werden, daß die Aufreißlaschen aus den metallfolienfreien Flächenbereichen (16) des Mehrschichtmaterials ausgeformt werden.

2. Verfahren nach Anspruch 1, dadurch gekennzeichnet, daß die Ausschnitte (11) in die Metallfolie (9) derart eingebracht werden, daß ihre Ränder am Rand der später aus dem Mehrschichtmaterial auszuschneidenden Membrandeckel (1) liegen.

3. Verfahren nach Anspruch 1, dadurch gekennzeichnet, daß die Membrandeckel (1) mit ihren Aufreißlaschen (2) aus dem Mehrschichtmaterial derart ausgeschnitten werden, daß jeweils die Aufreißlaschen (2) mehrerer Deckel (1) aus den metallfolienfreien Flächenbereichen (16) des Mehrschichtmaterials ausgeformt werden.

4. Verfahren nach Anspruch 1, dadurch gekennzeichnet, daß bei gleichem Muster der metallfreien Flächenbereiche (16) unterschiedlich große Deckel (1) mit nichtmetallischen Aufreißlaschen (2) aus dem Mehrschichtmaterial ausgeschnitten werden.

5. Verfahren nach Anspruch 1, dadurch gekennzeichnet, daß die Metallfolie (9) mit einer an einer Außenseite des Mehrschichtmaterials zu liegen kommenden Schicht zum Beispiel aus Karton (6), Papier oder dergleichen versehen wird.

6. Verfahren nach Anspruch 1, dadurch gekennzeichnet, daß auf die Metallfolie (9) vor dem Ausschneiden der Ausschnitte und vor dem Aufkaschieren der nichtmetallischen Schicht eine weitere Metallfolie (9) aufgebracht wird.

7. Verfahren nach Anspruch 6, dadurch gekennzeichnet, daß als Kaschiermittel zum Verbinden der zwei Metallfolien (9) ein Kaschiermittel mit geringer Haftfestigkeit verwendet wird.

8. Verfahren nach Anspruch 5, dadurch gekennzeichnet, daß als Kaschiermittel zum Verbinden der Kartonschicht mit der Metallfolie ein Kaschiermittel mit geringer Haftfestigkeit verwendet wird.

9. Verfahren nach Anspruch 1, dadurch gekennzeichnet, daß als Kaschiermittel zwischen der Metallfolie und der nichtmetallischen Schicht ein Kaschiermittel mit geringer Haftfestigkeit verwendet wird.

# Fig. 1

# Fig. 2

## Fig. 3

## Fig. 4

# Fig. 5

# Fig. 6

# Fig. 7

# Fig. 8

EP 0 433 475 A1

# Fig. 9

10

# Fig. 10

# Fig. 11

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | US-A-4 381 848 (KAHN) <br> * Ansprüche 1-7; Figuren 1,2,4-6; Spalte 1, Zeilen 5-27,38-58; Spalte 2, Zeilen 27-64; Beispiel 1 * | 1-3 | B 32 B 15/08 <br> B 32 B 3/24 <br> B 65 D 77/20 |
| A | | 5-9 | |
| Y | DE-A-2 946 739 (TETRAPAK) <br> * Ansprüche 1,2; Zusammenfassung; Seite 7, Absatz 2; Figuren 1,3 * | 1-3 | |
| A | EP-A-0 040 797 (ZWECKFORM) <br> * Seite 3, Zeilen 1-19; Figuren 1,2,4 * | 1,5,8,9 | |

| | | | RECHERCHIERTE SACHGEBIETE (Int. Cl.5) |
|---|---|---|---|
| | | | B 32 B <br> B 65 D |

Der vorliegende Recherchenbericht wurde für alle Patentansprüche erstellt

| Recherchenort | Abschlußdatum der Recherche | Prüfer |
|---|---|---|
| DEN HAAG | 13-08-1990 | DERZ T. |

EPO FORM 1503 03.82 (P0403)